# EUROPÄISCHE PATENTSCHRIFT

(11) **EP 2 962 965 B1**
(45) Veröffentlichungstag und Bekanntmachung des Hinweises auf die Patenterteilung: **04.03.2020**
(21) Anmeldenummer: 15169409.8
(22) Anmeldetag: 27.05.2015
(51) Int. Cl.: B65G 27/00, B06B 3/00, B65G 27/24

(54) **SCHWINGFÖRDERER**
VIBRATORY CONVEYOR
CONVOYEUR OSCILLANT

(30) Priorität: 03.07.2014 DE 102014109314
(43) Veröffentlichungstag der Anmeldung: 06.01.2016
(73) Patentinhaber: Afag Holding AG, 6052 Hergiswil (CH)
(72) Erfinder: Bott, Klaus, 90518 Altdorf (DE); Mesan, Izudin, 90439 Nürnberg (DE); Mojrzisch, Sebastian, 30449 Hannover (DE); Twiefel, Jens, 30159 Hannover (DE); Wallascheck, Jörg, 30161 Hannover (DE)
(74) Vertreter: Lindner Blaumeier Patent- und Rechtsanwälte

(56) Entgegenhaltungen:
- WO-A1-2010/131509
- DE-A1- 2 752 067
- DE-A1- 2 809 367
- DE-A1- 3 303 191
- DE-A1- 4 216 050
- DE-A1-102012 211 103
- DE-C1- 4 328 750
- GB-A- 2 397 863
- JP-A- S61 124 412
- JP-A- 2001 058 719
- JP-A- 2011 062 068
- US-A- 5 810 155
- US-A1- 2003 081 798

## Beschreibung

Die Erfindung betrifft einen Schwingförderer, umfassend eine Schwingschiene, auf der Güter durch eine Schwingung der Schwingschiene in Richtung einer ersten Position auf der Schwingschiene förderbar sind, sowie wenigstens ein Anregungselement zur Anregung der Schwingung, wobei das Anregungselement ein an der ersten Position mit der Schwingschiene gekoppelter Ultraschallwandler ist, über den die Schwingschiene an der ersten Position in Abhängigkeit eines durch eine Steuereinrichtung bereitgestellten Steuersignals zur Schwingung anregbar ist.

Schwingförderer werden unter anderem zum Zuführen kleiner Bauteile bzw. Bauteilkomponenten in automatisierten Fertigungsprozessen eingesetzt. Durch ellipsenartige Rüttelbewegungen einer starren Schiene wird das zu fördernde Material entlang einer vordefinierten Bahn gefördert. Zur Erzeugung der Rüttelbewegung können elektromagnetische Schwingungserreger eingesetzt werden, die vorzugsweise mit der Netzfrequenz von 50 Hz bzw. 60 Hz betrieben werden. Die elektromagnetischen Schwingungserreger können gleichrichtend wirken, womit die Schwingungsfrequenz des Schwingförderers bei 100 Hz bzw. 120 Hz und somit in einem von Menschen wahrnehmbaren akustischen Bereich liegt. Eine niedrige Schwingungsfrequenz führt somit zum einen zu einer Geräuschbelastung der Umgebung. Zum anderen sind bei vielen Anwendungsfällen starke Vibrationen unerwünscht, da sie benachbart ablaufende Prozesse stören können. Elektromagnetische Schwingungserreger erzeugen aufgrund ihres Funktionsprinzips auch elektromagnetische Strahlung, die benachbarte Einrichtungen oder Prozesse stören kann.

Statt elektromagnetische Schwingungserreger können auch andere Aktoren, beispielsweise Piezoaktoren, genutzt werden, um eine starre Schiene in Schwingung zu versetzen. Ein ausschließliches Ersetzen der Schwingungserreger führt jedoch bei einer gleichen Schwingungsamplitude zu einer vergleichbaren Geräuschbelastung.

Aus der Druckschrift JP 2011 062068 A ist eine kontaktlose Fördereinrichtung bekannt. Hierbei werden Biegeschwingungen einer vibrierenden Platten angeregt, um ein Mikro-Objekt in eine bestimmte Richtung zu fördern. Zwischen der vibrierenden Platte und einer reflektierenden Platte resultiert eine stehende Welle. Durch eine Anregung der vibrierenden Platte durch Ultraschallwandler an zwei Positionen, wobei die Anregung mit einem Phasenversatz erfolgt, resultiert eine Wanderwelle, wodurch das Mikro-Objekt förderbar ist. In einer weiteren Ausführungsform wird nur ein Ultraschallwandler genutzt und die Vibrationen der vibrierenden Platte werden beabstandet von dem Ultraschallwandler durch ein an der vibrierenden Platte angebrachtes ultraschallabsorbierendes Material, beispielsweise Plastik, bedämpft. JP 2011 062068 A offenbart einen Schwingförderer nach dem Oberbegriff des Anspruchs 1.

Der vorliegenden Erfindung liegt daher die Aufgabe zugrunde, einen Schwingförderer anzugeben, der demgegenüber bezüglich einer Geräuschbelastung beim Betrieb verbessert ist und der dennoch hohe Förderraten ermöglicht.

Die Aufgabe wird erfindungsgemäß durch einen Schwingförderer nach Anspruch 1 gelöst.

Erfindungsgemäß wird somit vorgeschlagen, die Schwingschiene an einer ersten Position, zu der Güter zu fördern sind, hochfrequent anzuregen und gleichzeitig den Schwingförderer so auszubilden, dass die Schwingung entlang der Schwingschiene gedämpft wird und somit ausgehend von der ersten Position entlang der Schwingschiene abfällt. Es wird somit nicht die gesamte Schwingschiene in eine elliptische Schwingbewegung versetzt, sondern es werden Verformungsschwingungen der Schwingschiene angeregt. Aufgrund der hochfrequenten Anregung werden insbesondere Oberflächenschwingungen der Schwingschiene angeregt. Die Dämpfung der Schwingung unterdrückt die Ausbildung stehender Wellen auf der Schwingschiene. Durch die Anregung wird eine entlang der Schwingschiene verlaufende Wanderwelle ausgebildet, die von der ersten Position ausgeht. Eine derartige Wanderwelle führt dazu, dass Güter auf der Schwingschiene entgegen der Ausbreitungsrichtung der Wanderwelle, also in Richtung der ersten Position, gefördert werden.

Die Anregung der Schwingungen erfolgt im erfindungsgemäßen Schwingförderer durch Ultraschallwandler, die Wechselspannungen bzw. Wechselströme in mechanische Schwingungen umwandeln. Die Schwingungsfrequenz kann größer als 10 kHz, insbesondere größer als 20 kHz, sein. Eine Schwingungsanregung der Schwingschiene kann durch eine Ankopplung des Ultraschallwandlers an die Schwingschiene über die gesamte Breite der Schwingschiene erfolgen. Alternativ ist es auch möglich, den Ultraschallwandler nur in einem insbesondere mittigen Teilbereich der Schwingschiene an die Schwingschiene anzukoppeln. Dies führt zu einer Komponente der Förderrichtung von Gütern, die zur Schienenmitte hin gerichtet ist und daher zu einer Stabilisierung der Güter auf der Schwingschiene. Der Ultraschallwandler kann direkt an die Schwingschiene angekoppelt sein, es kann jedoch auch ein zusätzliches Koppelelement zwischen dem Ultraschallwandler und der Schwingschiene vorgesehen sein.

Die Schwingschiene selbst kann aus einem schwingungsdämpfenden Material gebildet sein. In diesem Fall kann die Schwingschiene aus einem Material mit hoher innerer Reibung, beispielsweise einem Kunststoff bzw. einem Elastomer gebildet werden. Insbesondere bei einer Nutzung von langen Schwingschienen kann es jedoch vorteilhaft sein, eine Schwingschiene zu nutzen, die selbst nur eine geringe Schwingungsdämpfung aufweist. Eine derartige Schwingschiene kann beispielsweise aus Glas, Metall oder Keramik gebildet sein.

Die Schwingschiene kann als eine längliche Platte ausgebildet sein. Es ist jedoch auch möglich, dass die Förderfläche der Schwingschiene, auf der Güter gefördert werden, eine konkave Form aufweist, beispielsweise die Form eines geschnittenen Vielecks, eines geschnittenen Kreises oder einer geschnittenen Ellipse.

Der Ultraschallwandler kann einen, insbesondere vorgespannten, mehrlagigen Piezoaktor umfassen. Mehrlagige Piezoaktoren sind besonders geeignet, um bereits bei relativ geringen Spannungen einen hohen Hub und/oder große Kräfte zu verursachen. Durch eine Vorspannung des Piezoaktors, also beispielsweise durch das Anordnen der Lagen des Piezoaktors in einem Gehäuse, derart, dass der Piezoaktor bereits komprimiert ist, können die Kräfte weiter erhöht werden. Ein derartiges Gehäuse kann beispielsweise aus Keramik oder Metall gebildet sein.

Der Piezoaktor kann insbesondere zwischen der Schwingschiene und einem Gegengewicht angeordnet sein. Das Gegengewicht kann ausschließlich über den Piezoaktor bzw. das Gehäuse eines vorgespannten Piezoaktors mit der Schwingschiene verbunden sein und ansonsten frei schwingen. Insbesondere bei einem Betrieb des Piezoaktors bei einer Resonanzfrequenz des Systems aus Piezoaktor, Gegengewicht und insbesondere einem Koppelelement, können bereits mit geringen Amplituden der Ansteuersignale große Schwingungsamplituden erreicht werden.

Der Piezoaktor oder ein mit dem Piezoaktor fest verbundenes Koppelelement kann mit der Schwingschiene verklebt und/oder verschraubt und/oder formschlüssig verbunden sein. Eine stabile Koppplung des Piezoaktors zur Schwingschiene ist einerseits wichtig, um eine optimale Einkopplung der Schwingung in die Schwingschiene zu erreichen. Andererseits kann der Ultraschallwandler im erfindungsgemäßen Schwingförderer, abgesehen von Drähten zur Zuführung des Steuersignals, ausschließlich durch die Schwingschiene gehaltert sein.

Ein weiteres Dämpfelement kann ein an einer zweiten Position mit der Schwingschiene gekoppelter weiterer Ultraschallwandler sein. Die Nutzung eines weiteren Ultraschallwandlers als Dämpfelement bietet zahlreiche Vorteile. So ist durch einen Austausch der Steuersignale des weiteren Ultraschallwandlers und des Ultraschallwandlers eine Änderung der Förderrichtung der Güter möglich. Durch Nutzung wenigstens zweier Ultraschallwandler, von denen wenigstens einer als Dämpfelement dient, kann zudem die Stärke der Dämpfung flexibel angepasst werden. Durch die Nutzung eines separaten Dämpfelements ist es insbesondere möglich, lange Schwingschienen aus einem nur gering schwingungsdämpfenden Material zu nutzen.

Es ist möglich, dass die Steuereinrichtung ausgebildet ist, dem weiteren Ultraschallwandler ein weiteres Steuersignal mit einer vorgegebenen Phasenlage zu dem Steuersignal des Ultraschallwandlers zuzuführen. Das weitere Steuersignal kann insbesondere so gewählt werden, dass es im Wesentlichen einer Phasenverschiebung einer von der ersten Position einlaufenden Schwingung um 180° entspricht. Die Amplitude des weiteren Steuersignals steuert den Grad der Dämpfung der Schwingung.

Alternativ ist es möglich, dass dem weiteren Ultraschallwandler eine weitere Steuereinrichtung zugeordnet ist, die ausgebildet ist, Schwingungen des weiteren Ultraschallwandlers zu erfassen und in Abhängigkeit der erfassten Schwingungen ein weiteres Steuersignal für den weiteren Ultraschallwandler bereitzustellen. Wird beispielsweise ein Ultraschallwandler auf Basis eines Piezoaktors genutzt, so fällt an dem Piezoaktor aufgrund der Schwingung der Schwingschiene an der zweiten Position und der Einkopplung dieser Schwingung in den Piezoaktor eine Spannung ab, die von der momentanen Schwingposition der Schwingschienen an der zweiten Position abhängig ist. Durch Überwachung dieser Spannung kann eine Schwingungsamplitude und eine Schwingungsphase an der zweiten Position erfasst werden und die zweite Steuereinrichtung kann ein Signal zur Kompensation dieser Schwingung generieren. Dabei ist es möglich, dass zur Erfassung der Schwingung die Ansteuerung des weiteren Ultraschallwandlers vorübergehend unterbrochen wird, es kann jedoch auch eine Überwachung der Schwingung während des Betriebs des zweiten Ultraschallwandlers zur Dämpfung der Schwingungen an der zweiten Position erfolgen.

Im erfindungsgemäßen Schwingförderer können auch mehr als zwei Ultraschallwandler genutzt werden. Beispielsweise kann entlang der Schwingschiene zunächst ein erster Ultraschallwandler an der ersten Position, davon beabstandet ein zweiter Ultraschallwandler an einer zweiten Position und davon beabstandet ein dritter Ultraschallwandler an einer dritten Position angeordnet sein. In Abhängigkeit davon, welcher der Ultraschallwändler dämpfend betrieben wird und welcher zur Erzeugung einer Wanderwelle betrieben wird, können Güter flexibel zwischen den drei Positionen transportiert werden. Soll beispielsweise ein Transport von der ersten zur dritten Position erfolgen, so kann der erste Ultraschallwandler zur Erzeugung einer Schwingung und der dritte Ultraschallwandler zur Dämpfung dieser Schwingung betrieben werden. In diesem Fall schwingt der zweite Ultraschallwandler rein passiv mit, da seine Piezoelemente nicht angesteuert werden und es erfolgt ein Transport von der ersten zur dritten Position. Werden hingegen beispielsweise der erste und der dritte Ultraschallwandler zur Erzeugung einer Wanderwelle angesteuert und der zweite Ultraschallwandler wird dämpfend betrieben, so bewegen sich Güter von der zweiten Position abhängig von ihrer genauen Lage in Richtung der ersten oder der dritten Position, was beispielsweise für eine Bauteilseparierung genutzt werden kann. Weitere Ansteuermöglichkeiten und die Nutzung von mehr als drei Anregungselementen entlang der Schwingschiene erschließen sich für den Fachmann aus der bisherigen Erläuterung und sollen nicht detailliert geschildert werden.

Die Steuereinrichtung kann insbesondere zur Bereitstellung eines Steuersignals mit der Resonanzfrequenz des Ultraschallwandlers an den Ultraschallwandler ausgebildet sein. Als Resonanzfrequenz kann die Resonanzfrequenz des schwingenden Systems aus Gegengewicht und Piezoaktor und insbesondere dem Koppelelement betrachtet werden. Wie eingangs erläutert können bei dem erfindungsgemäßen Schwingförderer genutzte Anregungsfrequenzen primär Oberflächenwellen der Schwingschiene anregen, womit die gesamte Schwingschiene näherungsweise als ortsfest betrachtet werden kann. Entsprechend kann die Schwingung als eine Schwingung des Gegengewichts und des Piezoaktors gegen eine ortsfeste Platte betrachtet werden.

Die Resonanzfrequenz, mit der die Anregung durch die Steuereinrichtung erfolgen soll, kann in der Steuereinrichtung fest vorgegeben sein. Es ist jedoch möglich, dass die Steuereinrichtung die Resonanzfrequenz des Ultraschallwandlers misst. Dies kann außerhalb des normalen Förderbetriebs, beispielsweise bei jedem Start des Schwingförderers oder bei Wartungsintervallen erfolgen. Die Resonanzfrequenz kann jedoch auch im laufenden Betrieb nachgestimmt werden. Zur Bestimmung der Resonanzfrequenz kann insbesondere die Phasenlage einer Steuerspannung und eines fließenden Stroms ausgewertet werden.

Der erfindungsgemäße Schwingförderer weist eine parallel zur Förderrichtung der Schwingschiene verlaufende seitliche Berandung auf, die eine Förderoberfläche der Schwingschiene zumindest einseitig begrenzt, wobei die Berandung als ein separates Bauteil ausgebildet ist, das an wenigstens zwei Punkten an der Schwingschiene befestigt ist und/oder in reibendem Kontakt zu der Schwingschiene ist. Insbesondere kann für die Berandung ein dämpfendes Material genutzt werden. Ist die Berandung an wenigstens zwei Punkten an der Schwingschiene befestigt, so wird bei einer Biegeschwingung der Schwingschiene auch die Berandung verformt. Ist diese aus schwingungsdämpfendem Material gebildet, so entzieht sie der Schwingung der Schwingschiene Energie, womit die Schwingung der Schwingschiene gedämpft wird. Auch dann, wenn die Berandung im reibenden Kontakt zur Schwingschiene ist, wird die Schwingschiene durch die Berandung bedämpft. Die Berandung dient sowohl dazu sicherzustellen, dass Güter die Schwingschiene nicht seitlich verlassen können, als auch als Dämpfelement.

Ergänzend kann der erfindungsgemäße Schwingförderer auch andere Dämpfelemente aufweisen. Beispielsweise kann ein schwingungsdämpfendes Material, also beispielsweise eine Schicht aus Gummi oder aus einem anderen Elastomer seitlich oder an einer Bodenseite der Schiene auf der gesamten Länge der Schiene oder bereichsweise angebracht sein. Auch andere reibungsbasierte Dämpfungen sind möglich. Beispielsweise kann die Schwingschiene an einem oder mehreren Punkten derart gelagert sein, dass eine geringfügige reibende Bewegung der Schwingschiene gegen die Lagerung möglich ist. Dies kann beispielsweise durch ein Umgreifen der Schwingschiene, beispielsweise durch einen gespannten Gurt, erfolgen. Ein entsprechender Gurt oder eine Halterung kann auch durch eine Ausnehmung in der Schwingschiene geführt sein.

Die Schwingschiene kann vorteilehaft aus einem transparenten Material gebildet sein. Beispielsweise kann die Schwingschiene aus Glas, einer transparenten Keramik oder einem transparenten Kunststoff gebildet sein. Dies ist insbesondere dann vorteilhaft, wenn die geförderten Güter durch eine Erfassungseinrichtung, beispielsweise eine Kamera, erfasst werden sollen. In diesem Fall kann die Schwingschiene von unten beleuchtet werden, um eine Erfassung der geförderten Objekte zu erleichtern. Es ist selbstverständlich auch möglich, dass eine Erfassung der geförderten Objekte von der der Förderoberfläche der Schwingschiene abgewandten Seite aus erfolgt. Bei Nutzung einer transparenten Schwingschiene können auch Lichtschranken oder Ähnliches, die durch die Schwingschiene treten, genutzt werden, um eine Förderung von Gütern zu überwachen.

Der Ultraschallwandler kann derart an der Schwingungsschiene angeordnet sein, dass bei Zuführung der Steuersignals zu dem Ultraschallwandler die Oberfläche der Schwingschiene in Abhängigkeit des Steuersignals senkrecht zu einer oder der Förderoberfläche der Schwingschiene ausgelenkt wird. Alternativ wäre es beispielsweise möglich, den Ultraschallwandler derart anzuordnen, dass er Schwingungen von einer seitlichen Kante der Schwingschiene in die Schwingschiene einkoppelt.

Weitere Vorteile und Einzelheiten der Erfindung ergeben sich aus den folgenden Ausführungsbeispielen sowie den zugehörigen Zeichnungen. Dabei zeigen schematisch:
- Fig. 1: einen Schwingförderer,
- Fig. 2: einen weiteren Schwingförderer,
- Fig. 3: die Schwingschiene eines Ausführungsbeispiels eines erfindungsgemäßen Schwingförderers, und
- Fig. 4: eine geschnittene Ansicht der in Fig. 3 gezeigten Schwingschiene.

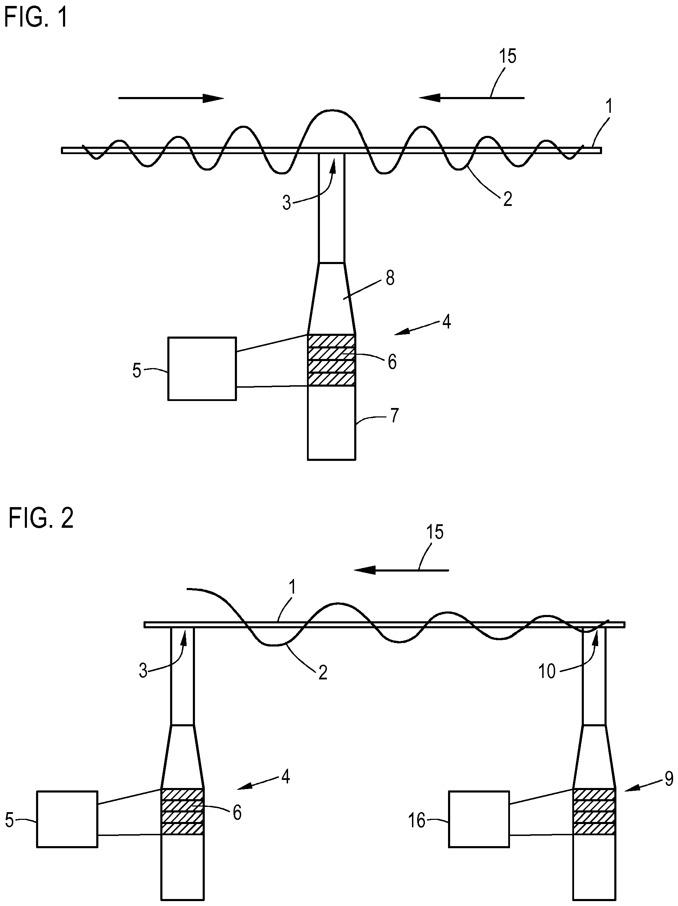

Fig. 1 zeigt einen Schwingförderer, der eine Schwingschiene 1 umfasst, auf der Güter durch eine durch die Linie 2 angedeutete Schwingung in die jeweils durch die Pfeile 15 angedeutete Richtung auf eine Position 3 zu förderbar sind. Die Schwingung der Schwingschiene 1 wird durch eine Anregung der Schwingschiene 1 an der Position 3 durch ein Anregungselement 4, das als Ultraschallwandler ausgebildet ist, erzeugt.

Die Schwingschiene 1 ist dämpfend ausgebildet, nämlich aus einem Elastomer mit einer relativ großen inneren Reibung. Daher fällt die Amplitude der durch die Linie 2 angedeuteten Schwingung mit zunehmendem Abstand von der ersten Position 3 entlang der Schwingschiene ab. Die Schwingung bildet eine Wanderwelle aus, die sich ausgehend von der Position 3 in beide Richtungen entgegen der durch den Pfeil 15 angezeigten Richtung entlang der Schwingschiene 1 ausbreitet. Aufgrund einer hohen Anregungsfrequenz, die größer als 10 kHz ist, schwing primär die Oberfläche der Schwingschiene 1. Durch diese Schwingung der Oberfläche der Schwingschiene 1 in Form einer Wanderwelle werden Güter, die beabstandet von der Position 3 auf die Schwingschiene 1 aufgebracht werden, entgegen der Richtung der Wanderwelle in Richtung der Position 3 gefördert.

Der Ultraschallwandler umfasst einen mehrlagigen Piezoaktor 6, der durch ein nicht gezeigtes Gehäuse aus Keramik vorgespannt ist. Durch Ausgabe einer insbesondere sinusförmigen Steuerspannung durch die Steuereinrichtung 5 wird der mehrlagige Piezoaktor 6 zu Schwingungen angeregt. Der Piezoaktor 6 ist über ein Kopplungselement 8 mit der Schwingschiene 1 verbunden. Das Kopplungselement ist piezoaktorseitig mit dem Piezoaktor 6 verklebt und auf Seiten der Schwingschiene 1 mit der Schwingschiene 1 verschraubt. In alternativen Ausführungsformen des Schwingförderers könnte das Kopplungselement 8 oder der Piezoaktor 6 selbst mit der Schwingschiene 1 verklebt und/oder verschraubt und/oder formschlüssig verbunden sein.

Das Kopplungselement 8 erstreckt sich schwingschienenseitig im Wesentlichen über die ganze Breite der Schwingschiene 1 senkrecht zur Bildebene. Somit wird die Schwingschiene auf ihrer gesamten Breite homogen angeregt. Alternativ wäre es möglich, dass sich das Kopplungselement 8 über einen Abschnitt geringerer Breite als die Breite der Schwingschiene 1 erstreckt. Insbesondere, wenn der Bereich der Kopplung zwischen dem Anregungselement 4 und der Schwingschiene 1 im Wesentlichen zentral bezüglich der Schienenbreite an der Position 3 angeordnet ist, wird eine Förderung mit einer Bewegungskomponente in Breitenrichtung zur Schienenmitte hin erreicht, womit Güter auf der Schwingschiene stabilisiert werden.

Die Schwingung des Anregungselements 4 erfolgt gegen ein Gegengewicht 7, das ausschließlich mit dem Piezoaktor 6 gekoppelt ist und ansonsten frei schwingt. Die Steuereinrichtung 5 regt den Ultraschallwandler durch Anlegen einer Spannung am Piezoaktor 6 bei einer Resonanzfrequenz des Ultraschallwandlers, also im Wesentlichen bei der Resonanzfrequenz des schwingenden Systems aus Piezoaktor 6 und Gegengewicht 7 an. Die Resonanzfrequenz kann durch die Steuereinrichtung 5 selbstständig ermittelt werden, indem beispielsweise eine Phasenlage zwischen der ausgegebenen Spannung des Steuersignals und dem Stromfluss erfasst und ausgewertet wird. Alternativ wäre es möglich, als Steuersignal ein impulsartiges Steuersignal auszugeben und anschließend den Spannungsverlauf am Piezoaktor zu überwachen. Dem Fachmann erschließen sich auch weitere Möglichkeiten, eine Resonanzfrequenz des Ultraschallwandlers zu ermitteln. Alternativ oder zur Einschränkung des Suchbereichs der Resonanzfrequenz kann eine Resonanzfrequenz des Ultraschallwandlers auch in der Steuereinrichtung 5 vorgegeben sein.

Die Schwingschiene 1 ist aus einem transparenten Material, beispielsweise einem transparenten Kunststoff, gebildet. Somit kann die Bewegung der Güter durch unterhalb der Schwingschiene 1 angeordnete Sensoren überwacht werden.

Alternativ oder ergänzend kann auch eine Beleuchtung der Schwingschiene 1 durch unter der Schwingschiene 1, das heißt anregungselementseitig, angeordnete Lichtquellen erfolgen. Durch optische Sensoren oberhalb der Schwingschiene 1 können Güter in diesem Fall besonders leicht durch ein Abschatten der Lichtquelle detektiert werden.

Fig. 2 zeigt einen weiteren Schwingförderer zur Förderung von Gütern durch ein durch die Linie 2 angedeutetes Schwingen der Schwingschiene 1 in Richtung einer ersten Position 3. Im Gegensatz zu dem Ausführungsbeispiel gemäß Fig. 1 wird als Material der Schwingschiene 1 ein Material genutzt, das die Schwingungen der Schwingschiene 1 nur gering dämpft. Das Material ist transparent, beispielsweise Glas oder eine transparente Keramik. Alternativ kann auch ein Metall als Material der Schwingschiene 1 genutzt werden.

Wie zu Fig. 1 erläutert beruht das Transportprinzip des Schwingförderers darauf, dass Güter entgegen der Ausbreitungsrichtung einer durch die Linie 2 angedeuteten Wanderwelle, also in Richtung des Pfeils 15 bewegt werden. Um eine Wanderwelle in einem schwach dämpfenden Material bereitzustellen, ist das zusätzliche Dämpfelement 9 vorgesehen, das als ein weiterer Ultraschallwandler ausgebildet ist. Das Dämpfelement 9 ist an der zweiten Position 10 mit der Schwingschiene 1 gekoppelt.

Der Aufbau des Dämpfelements 9, also des zweiten Ultraschallwandlers, entspricht dem Aufbau des Anregungselements 4, also dem ersten Ultraschallwandler. Die Unterschiede zwischen dem Anregungselement 4 und dem Dämpfelement 9 ergeben sich aus der unterschiedlichen Ansteuerung des Dämpfelements 9 durch die weitere Steuereinrichtung 16 gegenüber der Ansteuerung des Anregungselements 4 durch die Steuereinrichtung 5. Ein dämpfender Betrieb des zweiten Ultraschallwandlers wird dadurch erreicht, dass die zweite Steuereinrichtung 16 durch Schwingungen der Schwingschiene 1 an der Position 10 induzierte Spannungen an einem Piezoaktor des Dämpfelements 9 erfasst und in Abhängigkeit davon ein Steuersignal für den Piezoaktor ermittelt und ausgibt. Da es sich bei den Schwingungen an Position 10 um periodische Schwingungen handelt, ist es möglich, durch relativ einfache, beispielsweise PLLbasierte, Schaltungen ein Steuersignal bereitzustellen, das bei Zuführung an den Piezoaktor des Dämpfelements 9 die Schwingung der Schwingschiene 1 an der Position 10 zumindest teilweise kompensiert.

In alternativen Ausführungsformen des Schwingförderers kann eine gemeinsame Steuereinrichtung genutzt werden, um sowohl ein Steuersignal für das Anregungselement 4 als auch ein weiteres Steuersignal für das Dämpfelement 9 bereitzustellen. Insbesondere kann als weiteres Steuersignal für das Dämpfelement 9 ein Steuersignal ausgegeben werden, das dem Steuersignal für das Anregungselement 4 bezüglich der Frequenzzusammensetzung entspricht, wobei die Phasenlage und die Amplitude dieses Signals zur Ausgabe an das Dämpfelement 9 angepasst werden.

Die Phasenlage des Steuersignals für das Dämpfelement 9 wird derart gewählt, dass das Steuersignal gegenüber einer von der Position 3 über die Schwingschiene 1 einlaufende Schwingung, die aufgrund des Steuersignals des Anregungselements 4 generiert ist, um 180° phasenversetzt ist, diese also bei Wahl einer passenden Amplitude vollständig oder teilweise auslöscht.

Gemäß einer weiteren Alternative ist es selbstverständlich auch möglich, separate Steuereinrichtungen zur Ansteuerung des Anregungselements 4 und des Dämpfelements 9 zu nutzen, wobei durch eine Synchronisierung der Steuereinrichtungen eine feste Phasenlage zwischen den Steuersignalen erreicht wird.

Die Phasenlage zwischen Steuersignal kann fest in der einen bzw. in den zwei Steuereinrichtungen vorgegeben sein, sie kann jedoch auch durch Tests, beispielsweise durch Vorgabe eines Steuersignals für das Anregungselement 4 und ein Messen der an der zweiten Position 10 resultierten Schwingungen, beispielsweise durch Messen der Spannung an dem Piezoaktor des Dämpfelements 9, erfasst werden.

Gegenüber dem in Fig. 1 gezeigten Ausführungsbeispiel ist die Nutzung einer im Wesentlichen nichtig dämpfenden Schwingschiene 1 und eines zusätzlichen Dämpfelements 9 vorteilhaft, da zum einen auch sehr lange Schwingschienen 1 genutzt werden können, wenn ein separates Dämpfelement an der zweiten Position 10 vorgesehen ist. Zum anderen kann allein durch eine Änderung der jeweiligen Steuersignale der zweite Ultraschallwandler auch als Anregungselement und der erste Ultraschallwandler auch als Dämpfelement betrieben werden kann. Der Schwingförderer kann somit allein durch einen Austausch der durch die Steuereinrichtungen 5, 16 bereitgestellten Steuersignale auch eine Förderung der Güter in die dem Pfeil 15 entgegengesetzte Richtung ermöglichen. Mit dem Schwingförderer ist somit ein bidirektionaler Transport von Gütern möglich.

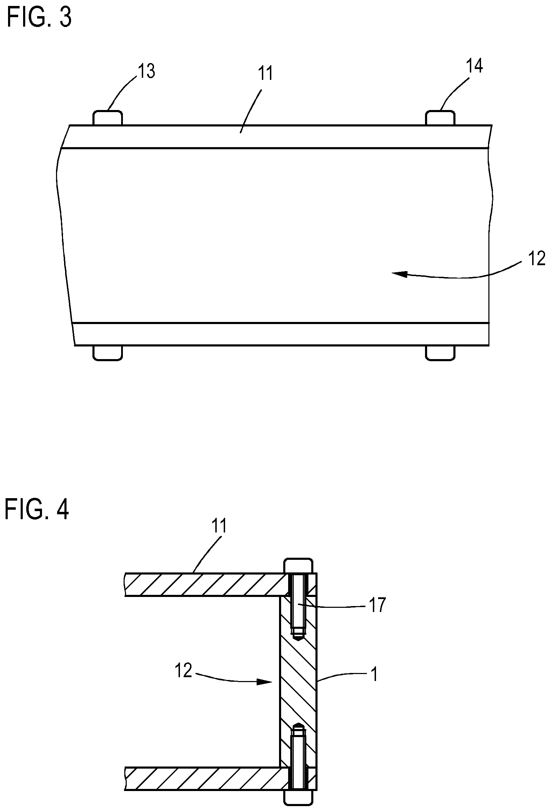

Die Figuren 3 und 4 zeigen eine Schwingschiene 1 eines erfindungsgemäßen Schwingförderers zur Förderung von Gütern, wobei an der Schwingschiene 1 eine Berandung 11 angeordnet ist, die an zwei Punkten 13, 14 durch Schrauben 17 mit der Schwingschiene 1 verschraubt ist. Durch das Vorsehen der Berandung 11 ist die Förderfläche 12 der Schwingschiene 1 seitlich begrenzt, so dass Güter die Schwingschiene 1 nicht seitlich verlassen können.

Die Berandung 11 erfüllt zudem die Funktion eines zusätzlichen Dämpfelements. Da die Berandung 11 nur an den Punkten 13, 14 mit der Schwingschiene 1 verbunden ist, ist die Schwingschiene 1 gegenüber der Berandung 11 in dem Bereich zwischen den Punkten 13 und 14 beweglich. Die Berandung 11 ist in diesem Bereich jedoch im reibenden Kontakt mit der Schwingschiene 1. Daher wird Energie von der Schwingschiene 1 auf die Berandung 11 übertragen und die Schwingung der Schwingschiene 1 wird bedämpft.

Alternativ wäre es möglich, die Schwingschiene durch eine Berandung zu bedämpfen, die entlang der gesamten Länge der Berandung mit der Schwingschiene 1 verbunden ist, beispielsweise indem eine Berandung aus einem elastischen Material mit relativ hoher innerer Reibung mit der Schwingschiene 1 verklebt wird.

In einer weiteren nicht gezeigten Alternative könnte die Schwingschiene 1 so geformt sein, dass die Förderoberfläche 12 konkav ist. Beispielsweise könnte die Förderoberfläche 12 die Form eines Halbkreises, einer Halbellipse oder eines geschnittenen Vielecks haben.

Zusätzlich zur Nutzung von an der Schwingschiene 1 befestigten Dämpfelementen, die zusätzlich eine Berandung 11 bilden, wäre es auch möglich, elastische Materialien mit hoher innerer Reibung auf der der Förderoberfläche 12 abgewandten Seite der Schwingschiene 1 zu befestigen, um die Schwingschiene zu bedämpfen. Eine weitere Möglichkeit der Bedämpfung der Schwingschiene wäre es, die Schwingschiene in wenigstens einer Position im Wesentlichen formschlüssig zu lagern, wobei die Schwingschiene 1 gegenüber der Lagerung geringfügig reibenden bewegbar ist. Beispielsweise kann die Schwingschiene 1 an einem Punkt, an dem sie bedämpft werden soll, durch einen Spanngurt oder Ähnliches gehaltert sein.

## Patentansprüche

1. Schwingförderer, umfassend eine Schwingschiene (1), auf der Güter durch eine Schwingung der Schwingschiene (1) in Richtung einer ersten Position (3) auf der Schwingschiene (1) förderbar sind, sowie wenigstens ein Anregungselement (4) zur Anregung der Schwingung, wobei das Anregungselement (4) ein an der ersten Position mit der Schwingschiene (1) gekoppelter Ultraschallwandler ist, über den die Schwingschiene (1) an der ersten Position (3) in Abhängigkeit eines durch eine Steuereinrichtung 5 bereitgestellten Steuersignals zur Schwingung anregbar ist, ein Dämpfelement, **dadurch gekennzeichnet, dass** das Dämpfelement als eine parallel zu einer Förderrichtung der Schwingschiene (1) verlaufende seitliche Berandung (11) ausgebildet ist, die eine Förderoberfläche (12) der Schwingschiene (1) zumindest einseitig begrenzt, wobei die Berandung (11) als ein separates Bauteil ausgebildet ist, das an wenigstens zwei Punkten an der Schwingschiene (1) befestigt ist und/oder in reibendem Kontakt zu der Schwingschiene (1) ist, so dass die Schwingungsamplitude mit zunehmendem Abstand von der ersten Position (3) entlang der Schwingschiene (1) abfällt.

2. Schwingförderer nach Anspruch 1, **dadurch gekennzeichnet, dass** der Ultraschallwandler einen, insbesondere vorgespannten, mehrlagigen Piezoaktor (6) umfasst.

3. Schwingförderer nach Anspruch 2, **dadurch gekennzeichnet, dass** der Piezoaktor (6) zwischen der Schwingschiene (1) und einem Gegengewicht (7) angeordnet ist.

4. Schwingförderer Anspruch 2 oder 3, **dadurch gekennzeichnet, dass** der Piezoaktor (6) oder ein mit dem Piezoaktor (6) fest verbundenes Koppelelement (8) mit der Schwingschiene (1) verklebt und/oder verschraubt und/oder formschlüssig verbunden ist.

5. Schwingförderer nach einem der vorangehenden Ansprüche, **dadurch gekennzeichnet, dass** als weiteres Dämpfelement (9) ein an einer zweiten Position (19) mit der Schwingschiene (1) gekoppelter weiterer Ultraschallwandler vorgesehen ist.

6. Schwingförderer nach Anspruch 5, **dadurch gekennzeichnet, dass** die Steuereinrichtung (5) ausgebildet ist, dem weiteren Ultraschallwandler ein weiteres Steuersignal mit einer vorgegebenen Phasenlage zu dem Steuersignal des Ultraschallwandlers zuzuführen.

7. Schwingförderer nach Anspruch 5, **dadurch gekennzeichnet, dass** dem weiteren Ultraschallwandler eine weitere Steuereinrichtung (16) zugeordnet ist, die ausgebildet ist, Schwingungen des weiteren Ultraschallwandlers zu erfassen und in Abhängigkeit der erfassten Schwingungen ein weiteres Steuersignal für den weiteren Ultraschallwandler bereitzustellen.

8. Schwingförderer nach einem der vorangehenden Ansprüche, **dadurch gekennzeichnet, dass** die Steuereinrichtung (5) zur Bereitstellung eines Steuersignals mit der Resonanzfrequenz des Ultraschallwandlers an den Ultraschallwandler ausgebildet ist.

9. Schwingförderer nach einem der vorangehenden Ansprüche, **dadurch gekennzeichnet, dass** die Schwingschiene (1) aus einem transparenten Material gebildet ist.

10. Schwingförderer nach einem der vorangehenden Ansprüche, **dadurch gekennzeichnet, dass** der Ultraschallwandler derart an der Schwingschiene (1) angeordnet ist, dass bei Zuführung des Steuersignals zu dem Ultraschallwandler die Oberfläche der Schwingschiene (1) in Abhängigkeit des Steuersignals senkrecht zu einer oder der Förderoberfläche (12) der Schwingschiene (1) ausgelenkt wird.

11. Schwingförderer nach einem der vorangehenden Ansprüche, **dadurch gekennzeichnet, dass** der Schwingförderer ein weiteres Dämpfelement (9) umfasst, das als eine Schicht aus Gummi oder einem anderen Elastomer ausgebildet ist, die seitlich oder an einer Bodenseite der Schwingschiene (1) auf der gesamten Länge der Schwingschiene (1) oder bereichsweise angebracht ist, so dass die Schwingungsamplitude mit zunehmendem Abstand von der ersten Position (3) entlang der Schwingschiene (1) abfällt.

## Claims

1. Vibratory conveyer, comprising a vibrating rail (1), on which goods can be conveyed in the direction of a first position (3) on the vibrating rail (1) by a vibration of the vibrating rail (1), and at least one excitation element (4) for exciting the vibration, wherein the excitation element (4) is an ultrasonic transducer coupled to the vibrating rail (1) at the first position, by which the vibrating rail (1) can be excited to vibrate at the first position (3) as a function of a control signal provided by a control device (5), a damping element,
**characterized in that** the damping element is formed as a lateral boundary (11) extending parallel to a conveying direction of the vibrating rail (1), which bounds a conveying surface (12) of the vibrating rail (1), at least on one side, wherein the boundary (11) is formed as a separate component which is fixed to the vibrating rail (1) at at least two points and/or is in rubbing contact with the vibrating rail (1), so that the amplitude of the vibration decreases along the vibrating rail (1) with increasing distance from the first position (3).

2. Vibratory conveyor according to Claim 1,
**characterized in that** the ultrasonic transducer comprises an in particular biased, multilayer piezoelectric actuator (6).

3. Vibratory conveyor according to Claim 2,
**characterized in that** the piezoelectric actuator (6) is arranged between the vibrating rail (1) and a counterweight (7).

4. Vibratory conveyor according to Claim 2 or 3,
**characterized in that** the piezoelectric actuator (6) or a coupling element (8) permanently connected to the piezoelectric actuator (6) is adhesively bonded and/or screwed and/or connected in a form-fitting manner to the vibrating rail (1) .

5. Vibratory conveyor according to one of the preceding claims, **characterized in that** a further ultrasonic transducer coupled to the vibrating rail (1) at a second position (19) is provided as a further damping element (9).

6. Vibratory conveyer according to Claim 5,
**characterized in that** the control device (5) is designed to supply the further ultrasonic transducer with a further control signal with a predefined phase position relative to the control signal of the ultrasonic transducer.

7. Vibratory conveyor according to Claim 5,
**characterized in that** the further ultrasonic transducer is assigned a further control device (16), which is designed to detect vibrations of the further ultrasonic transducer and provide a further control signal for the further ultrasonic transducer as a function of the detected vibrations.

8. Vibratory conveyor according to one of the preceding claims, **characterized in that** the control device (5) is designed to provide a control signal at the resonant frequency of the ultrasonic transducer to the ultrasonic transducer.

9. Vibratory conveyor according to one of the preceding claims, **characterized in that** the vibrating rail (1) is formed from a transparent material.

10. Vibratory conveyor according to one of the preceding claims, **characterized in that** the ultrasonic converter is arranged on the vibrating rail (1) in such a way that when the control signal is supplied to the ultrasonic converter, the surface of the vibrating rail (1) is deflected at right angles to one or the conveying surface (12) of the vibrating rail (1) as a function of the control signal.

11. Vibrating conveyer according to one of the preceding claims, **characterized in that** the vibratory conveyor comprises a further damping element (9), which is formed as a layer of rubber or another elastomer which is applied laterally or to a bottom side of the vibrating rail (1) over the entire length of the rail (1) or in some regions, so that the amplitude of vibration decreases along the vibrating rail (1) with increasing distance from the first position (3).

## Revendications

1. Convoyeur oscillant, comprenant un rail oscillant (1), sur lequel des marchandises peuvent être transportées en direction d'une première position (3) sur le rail oscillant (1) par une oscillation du rail oscillant (1), ainsi qu'au moins un élément d'excitation (4) destiné à stimuler l'oscillation, l'élément d'excitation (4) étant un transducteur d'ultrasons couplé au rail oscillant (1) au niveau de la première position, par le biais duquel le rail oscillant (1) peut être stimulé en oscillation au niveau de la première position (3) en fonction d'un signal de commande fourni par un dispositif de commande (5), un élément amortisseur, **caractérisé en ce que** l'élément amortisseur est réalisé sous la forme d'une bordure (11) latérale qui suit un tracé parallèle à une direction de transport du rail oscillant (1), laquelle délimite au moins unilatéralement une surface de transport (12) du rail oscillant (1), la bordure (11) étant réalisée sous la forme d'un élément structural séparé qui est fixé en au moins deux points au rail oscillant (1) et/ou se trouve en contact de friction avec le rail oscillant (1), de sorte que l'amplitude d'oscillation chute le long du rail oscillant (1) à mesure que l'écart par rapport à la première position (3) augmente.

2. Convoyeur oscillant selon la revendication 1, **caractérisé en ce que** le transducteur d'ultrasons comporte un actionneur piézoélectrique (6) multicouche, notamment précontraint.

3. Convoyeur oscillant selon la revendication 2, **caractérisé en ce que** l'actionneur piézoélectrique (6) est disposé entre le rail oscillant (1) et un contrepoids (7) .

4. Convoyeur oscillant selon la revendication 2 ou 3, **caractérisé en ce que** l'actionneur piézoélectrique (6) ou un élément de couplage (8) relié à demeure à l'actionneur piézoélectrique (6) est collé et/ou vissé et/ou assemblé par complémentarité de formes au rail oscillant (1).

5. Convoyeur oscillant selon l'une des revendications précédentes, **caractérisé en ce qu'**un transducteur d'ultrasons supplémentaire, couplé au rail oscillant (1) au niveau d'une deuxième position (19), est prévu en tant qu'élément amortisseur supplémentaire (9).

6. Convoyeur oscillant selon la revendication 5, **caractérisé en ce que** le dispositif de commande (5) est configuré pour acheminer au transducteur d'ultrasons supplémentaire un signal de commande supplémentaire ayant un déphasage prédéfini par rapport au signal de commande du transducteur d'ultrasons.

7. Convoyeur oscillant selon la revendication 5, **caractérisé en ce qu'**un dispositif de commande supplémentaire (16) est associé au transducteur d'ultrasons supplémentaire, lequel est configuré pour détecter les oscillations du transducteur d'ultrasons supplémentaire et fournir un signal de commande supplémentaire pour le transducteur d'ultrasons supplémentaire en fonction des oscillations détectées.

8. Convoyeur oscillant selon l'une des revendications précédentes, **caractérisé en ce que** le dispositif de commande (5) est configuré pour fournir au transducteur d'ultrasons un signal de commande ayant la fréquence de résonance du transducteur d'ultrasons.

9. Convoyeur oscillant selon l'une des revendications précédentes, **caractérisé en ce que** le rail oscillant (1) est constitué d'un matériau transparent.

10. Convoyeur oscillant selon l'une des revendications précédentes, **caractérisé en ce que** le transducteur d'ultrasons est disposé au niveau du rail oscillant (1) de telle sorte que lors de l'acheminement du signal de commande au transducteur d'ultrasons, la surface du rail oscillant (1) est déviée perpendiculairement à une ou à la surface de transport (12) du rail oscillant (1) en fonction du signal de commande.

11. Convoyeur oscillant selon l'une des revendications précédentes, **caractérisé en ce que** le convoyeur oscillant comporte un élément amortisseur supplémentaire (9) qui est réalisé sous la forme d'une couche en caoutchouc ou en un autre élastomère, qui est appliquée latéralement ou au niveau d'un côté de fond du rail oscillant (1) sur toute la longueur du rail oscillant (1) ou dans certaines zones, de sorte que l'amplitude d'oscillation chute le long du rail oscillant (1) à mesure que l'écart par rapport à la première position (3) augmente.
